# EUROPÄISCHE PATENTSCHRIFT

(11) **EP 1 853 455 B1**
(45) Veröffentlichungstag und Bekanntmachung des Hinweises auf die Patenterteilung: **18.07.2012**
(21) Anmeldenummer: 06706924.5
(22) Anmeldetag: 14.02.2006
(51) Int. Cl.: B60N 2/22, B64D 11/06

(54) **SITZ**
SEAT
SIEGE

(30) Priorität: 02.03.2005 DE 102005009419
(43) Veröffentlichungstag der Anmeldung: 14.11.2007
(60) Teilanmeldung: 10011536.9
(73) Patentinhaber: Recaro Aircraft Seating GmbH & Co. KG, 74523 Schwäbisch Hall (DE)
(72) Erfinder: BAUMANN, Jürgen, 78351 Ludwigshafen (DE)
(74) Vertreter: Daub, Thomas
(86) Internationale Anmeldenummer: PCT/EP2006/001317
(87) Internationale Veröffentlichungsnummer: WO 2006/092205

(56) Entgegenhaltungen:
- EP-A- 0 017 253
- EP-A- 1 216 879
- EP-A2- 0 302 427
- EP-A2- 1 074 468
- EP-A2- 1 234 763
- DE-A1- 3 638 231
- DE-A1- 19 724 763
- DE-C1- 10 064 574
- GB-A- 1 278 501
- GB-A- 2 016 915
- GB-A- 2 292 676

## Beschreibung

Die Erfindung betrifft einen Sitz, insbesondere einen Fahrzeug- oder Fluggastsitz, mit einem Sitzboden, einer Rückenlehne, einer Grundstruktur zur Aufständerung des Sitzes auf einem Boden, sowie einer Kopplungseinrichtung zur Kopplung der Bewegungseinstellung der Rückenlehne mit dem Sitzboden zwischen einer Ausgangs- und mindestens einer Komfortstellung sowie umgekehrt, wobei bei einem Übergang der Rückenlehne von der Ausgangs- zur Komfortstellung eine Neigungsänderung der Rückenlehne und des Sitzbodens nach hinten erfolgt und wobei die Kopplungseinrichtung mindestens ein Steuerteil aufweist, das über die Bewegung der Rückenlehne und/oder des Sitzbodens ansteuerbar ist und dabei den Sitzboden und/oder die Rückenlehne zwischen den genannten Stellungen verfährt, und wobei das Steuerteil einen Winkelhebel aufweist, der mit seinem einen, hinteren Endbereich an der Rückenlehne starr angelenkt ist und zumindest ein Lagerelement mit einer Drehachse zur Abstützung einer Schwenkbewegung des Sitzbodens um die Drehachse umfasst, und der mit seinem anderen, vorderen Endbereich mit mindestens einem Lenkertrieb in Wirkverbindung steht, wobei der Lenkertrieb zumindest zwei Kopplungsstellen zur Ankopplung des Winkelhebels an die Grundstruktur aufweist und der Lenkertrieb bei dem Übergang der Rückenlehne von der Ausgangs- in die Komfortstellung nach vorne schwenkt.

Lang andauerndes Sitzen, wie es bei Fernreisen oder Langstreckenflügen vorkommt, stellt je nach Ausgestaltung des jeweiligen Sitzes eine nicht unerhebliche Einschränkung der Bequemlichkeit für den jeweiligen Passagier dar. Als Folge unzureichend berücksichtigter Bequemlichkeits- und Ergonomieerfordernisse, vor allem betreffend Sitze, die dem Economy-Class-Bereich bei Flugzeugen zugerechnet werden, können beim jeweiligen Sitzbenutzer Ermüdungserscheinungen, Muskelverspannungen oder sogar ein Kreislaufversagen auftreten.

Die Druckschrift DE 197 24 763 A1 offenbart einen Sitz mit einer Rückenlehne und einem Sitzteil, welches einen Sitzboden aufweist. Es ist ferner eine Kopplungseinrichtung gezeigt, die zur Kopplung der Bewegungseinstellung von der Rückenlehne mit dem Sitzboden zwischen einer Ausgangsstellung und mindestens einer Komfortstellung sowie umgekehrt vorgesehen ist. Beim Übergang zwischen der Ausgangsstellung und der Komfortstellung führt die Rückenlehne eine Neigungsbewegung nach hinten aus.

Die Kopplungseinrichtung weist ein Steuerteil auf, das einen an der Rückenlehne angelenkten Winkelhebel umfasst. Dieser Winkelhebel besteht aus einem ersten Arm, der an seinem vorderen Ende an einem Sitzteiler schwenkbar angelenkt ist und an seinem anderen Ende mit der Rückenlehne starr verbunden ist, und einem zweiten Arm, der mit seinem einen Ende mit dem ersten Arm und der Rückenlehne starr verbunden ist und in seinem anderen Endbereich mit einem Lenkertrieb, bestehend aus einem Lenker, schwenkbar verbunden ist.

Der erste Arm des Winkelhebels bildet einen Fortsatz der Rückenlehne nach vorne, der um eine dem Lagerungspunkt des Arms entsprechende Schwenkachse am Sitzteiler schwenkbar gelagert ist. Bei einer Neigungseinstellung der Rückenlehne nach hinten treibt der Winkelhebel durch ein Schwenken um die Schwenkachse den Lenkertrieb mit dem Lenker, an welchem die hintere Kante des Sitzbodens schwenkbar gelagert ist, nach vorne. Dadurch ergibt sich eine Schiebebewegung nach vorne sowie eine Neigung des Sitzbodens, die durch ein Paar von an einer Grundstruktur angelenkten Lenkern geführt ist, bei welcher der Sitzboden in seinem hinteren Teil abgesenkt wird, während sich die vordere Kante anhebt.

Ausgehend von diesem Stand der Technik liegt daher der Erfindung die Aufgabe zugrunde, die bekannten Lösungen dahingehend weiter zu verbessern, dass bei niedrigem Preisniveau ein ergonomisch verbesserter Sitz geschaffen ist, der funktionssicher im Gebrauch ist und dergestalt insbesondere eine Verwendung im Economy-Class-Bereich in Flugzeugen ermöglicht. Eine dahingehende Aufgabe löst ein Sitz mit den Merkmalen des Patentanspruches 1 in seiner Gesamtheit.

Dadurch, dass gemäß dem kennzeichnenden Teil des Patentanspruches 1 die Kopplungsstellen in jeder Stellung der Rückenlehne mit dem Sitzboden zwischen der Ausgangs- und der mindestens einen Komfortstellung vor der Drehachse angeordnet sind, ist eine Einstell-, insbesondere Neigebewegung der Rückenlehne an eine synchron verlaufende Einstellbewegung des Sitzbodens angeknüpft, der dabei vorzugsweise im rückwärtigen Übergangsbereich zur Rückenlehne sich um einen vorgebbaren Betrag gegenüber der Sitzvorderkante absenkt, die dabei gleichzeitig zur Vergrößerung der Sitztiefe sich nach vorne schiebt. Die letztgenannte Position entspricht dabei einer Komfortstellung, die ein Ruhen oder Entspannen für den Sitzbenutzer ermöglicht, wobei er insbesondere durch die Unterstützung im vorderen Auflagebereich der Beine durch die angehobene Sitzvorderkante von der Sitzarbeit entlastet wird.

Vorzugsweise verzichtet der erfindungsgemäße Sitz dabei auf zusätzliche Einstellmittel, wie ansteuerbare Aktuatoren, um von einer aufrechten Rükkenlehnenposition, wie sie der Start-, Lande- und Rollstellung (TTL-Position) innerhalb eines Flugzeuges entspricht, in die Komfort- oder Ruhelage, also in die Reisestellung, mit geneigter Rückenlehne zu gelangen sowie umgekehrt, sondern vielmehr wird allein durch einen geringen Einsatz von Körperkräften des Sitzbenutzers im Sinne einer Vor- und Zurückschiebebewegung das Sitzteil nebst zugehörigem Sitzboden bewegt, wobei über die angesprochene Kopplungseinrichtung dann die Rückenlehne in der Neigungseinstellung sinnfällig mitfolgt. Die dahingehende sinnfällige Einstellbewegung kann noch dadurch unterstützt werden, indem bei der rückwärtigen Neigungseinstellung der Rücken des Sitzbenutzers gegen die Rückenlehne drückt oder diese bei der Aufrichtbewegung entsprechend entlastet.

Insoweit läßt sich der Sitz kostengünstig und funktionssicher realisieren, wobei in einer Erweiterung des Sitzprogramms der erfindungsgemäße Sitz im Sinne einer weiteren Komforterhöhung auch über entsprechende Aktuatoren verfügen könnte, um dergestalt über entsprechend übliche Steuereinrichtungen die jeweilige Einstellung vorzunehmen. Da mit dem Sitz aber gerade der Einsatzbereich in der Economy-Class abgedeckt werden soll, wird auch bereits aus Gewichtsgründen heraus sowie im Hinblick auf den fehlenden Aufstell- und Einbauraum, vorzugsweise auf die dahingehende weitere Ausgestaltung verzichtet.

Vorzugsweise kommt als Kopplungseinrichtung ein Lenkertrieb mit Paaren an Lenkern zum Einsatz, die sich in platzsparender Weise unterhalb des Sitzbodens des Sitzes anordnen lassen und die mit kleinen Betätigungskräften relativ große Einstellstrecken zurücklegen können. Auch haben sich die dahingehenden Lenkertriebe im Hinblick auf die vorgeschriebenen Erfordernisse an die Stabilität im etwaigen Crashfall mehr als geeignet erwiesen. Sofern bei einer besonders bevorzugten Ausführungsform der erfindungsgemäßen Sitzlösung die Lenker des jeweiligen Lenkertriebes in jeder Verfahrstellung einen hohlprofilartigen Tragkörper als Teil der Grundstruktur übergreifen, mit der der Sitz auf einem Boden aufständerbar ist, ist hierdurch eine sehr steife Sitzaufnahmekonstruktion erreicht und die dahingehende Lösung nimmt auch wenig Einbauraum ein, so dass unterhalb des Tragkörpers Raum geschaffen ist, beispielsweise als Stauraum, geeignet zur Aufnahme von Gepäckstücken od. dgl.. Auch steht dergestalt Einbauraum zur Aufnahme einer Schwimmweste od. dgl. zur Verfügung.

Vorzugsweise ist bei dem erfindungsgemäßen Sitz weiter vorgesehen, dass mit der rückwärtigen Neigungseinstellung der Rückenlehne und unter der Körperkraft des Sitzbenutzers ein Energiespeicher (Gas- oder Hydro-Lock) aufgeladen ist, der bei der entgegengesetzten Aufrichtbewegung der Rükkenlehne in die TTL - Position die dahingehende Aufrichtbewegung unterstützt und dergestalt den Sitzbenutzer entlastet.

Als besonders günstig hat es sich bei der erfindungsgemäßen Lösung gezeigt, bei der Ausgestaltung der Kopplungseinrichtung ein festlegbares Winkelverhältnis zu definieren, das das Verhältnis einer Neigungsänderung der Rückenlehne zur dabei vollführten Neigungsänderung des Sitzbodens in definierten Grenzen vorgeben soll; insbesondere lassen sich Winkelverhältnisse von 1:1 bis 5:1, besonders bevorzugt jedoch im Rahmen von 2:1 bis 4:1 vorgeben. Die dahingehenden Winkelverhältnisse ergeben eine günstige Krafteinleitung bei einer Bewegung des Sitzes durch Körperkräfte. Dergestalt läßt sich auch die Längeneinstellung bezogen auf die Sitzvorderkante des Sitzbodens definieren, wobei dergestalt sich Längenänderungen im Bereich von einigen Zentimetern, bevorzugt von ca. 2,5 cm, vorgeben lassen.

Im Folgenden wird der erfindungsgemäße Sitz anhand eines Ausführungsbeispiels als Fluggastsitz näher erläutert. Dabei zeigen in prinzipieller und nicht maßstäblicher Darstellung die
- Fig. 1: in seitlicher Ansicht den Sitz mit Kopplungseinrichtung in einer Ausgangsstellung I und
- Fig. 2: den in Fig. 1 dargestellten Sitz in einer Komfortstellung II mit strichliniert angedeuteter Ausgangsstellung I.

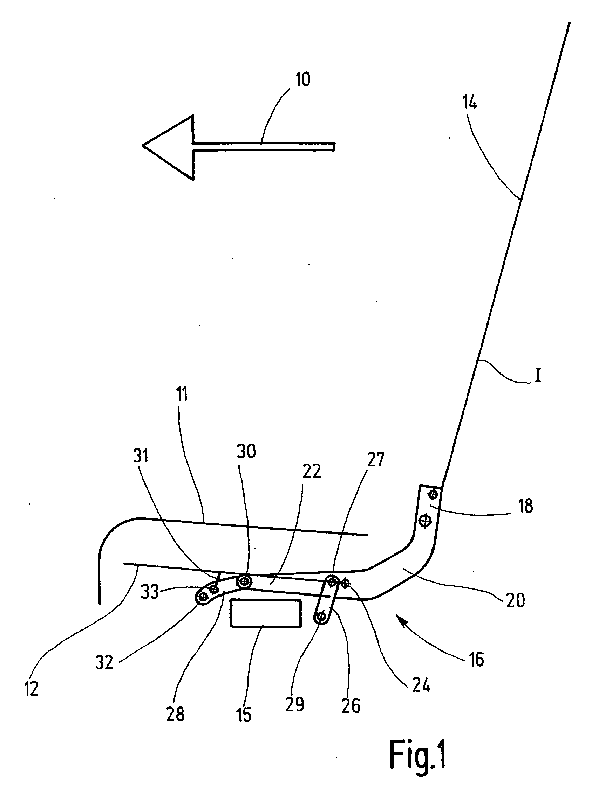

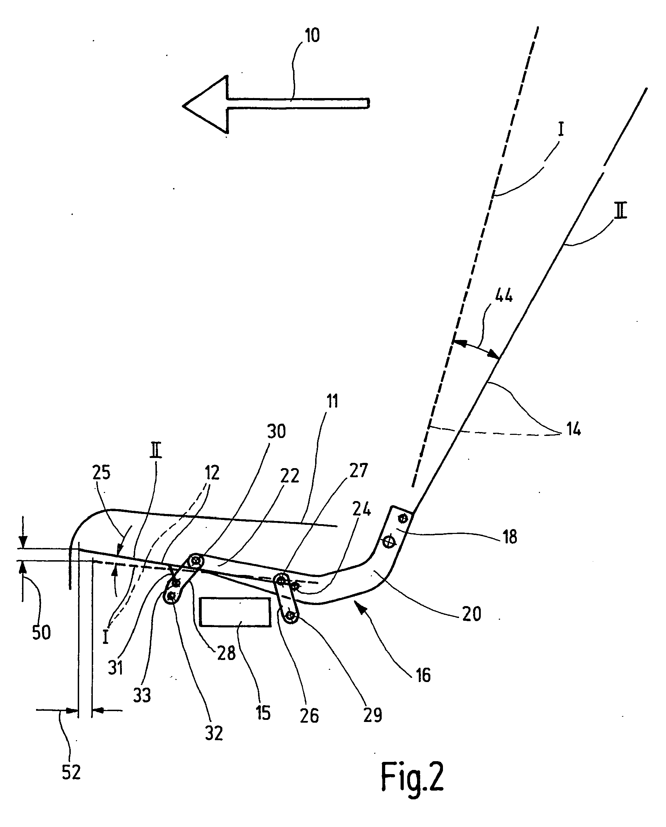

Die Fig. 1 zeigt in seitlicher, prinzipieller Ansicht die für die erfindungsgemäße Lösung wesentlichen Komponenten eines Sitzes in einer Ausgangsstellung I, die in der Fig.2 strichliniert wiedergegeben ist. Die dahingehende Ausgangsstellung I zeigt die Einstellung des Sitzes, wie sie zum Starten und Landen sowie beim Rollen (TTL - Position) bevorzugt ist. Die Bewegungsrichtung des Flugzeuges ist in Fig. 1 symbolhaft mit einem Pfeil 10 wiedergegeben. Wird bei den folgenden Erläuterungen von einem "vorderen" und einem "hinteren" Teil des Sitzes gesprochen, so bedeutet dies, dass sich das "vordere" Teil in Bewegungsrichtung 10 vor dem "hinteren" Teil befindet. Nur für die Erläuterung wesentliche Bestandteile des Sitzes sind in den Figuren dargestellt; so ist unter anderem auch der Sitzbezug 11 analog der Oberseite eines Sitzpolsterteils nur abschnittsweise angedeutet. Ferner sind der Sitzboden 12 sowie die Rückenlehne 14 in der Seitenansicht als Strichdarstellung nur schematisch angedeutet. Die beim Einbau des Sitzes in ein Flugzeug erforderliche Grundstruktur zur Aufständerung des Sitzes gegenüber einem nicht näher dargestellten Kabinenboden ist nur durch eines Ihrer Bestandteile, nämlich einen hohlprofilartigen Tragkörper 15, in der Art eines Tragholmes wiedergegeben. Die als Ganzes mit 16 bezeichnete Kopplungseinrichtung dient der Kopplung der Bewegungseinstellung von Sitzkomponente Rückenlehne 14 mit Sitzkomponente Sitzboden 12.

Ausgehend vom oberen, kopfnahen Bereich der Rückenlehne 14 ist diese in ihrem unteren, dem Sitzboden 12 zugewandten hinteren Endbereich 18 an einen zur Kopplungseinrichtung 16 gehörigen Winkelhebel 20 angelenkt, wobei die Anlenkung der Rückenlehne 14 an dieser Stelle starr ausgeführt ist.

Weitere Bestandteile der Kopplungseinrichtung 16 werden im folgenden fortschreitend und ausgehend vom hinteren Endbereich 18 des Winkelhebels 20 zu seinem vorderen Endbereich 22 näher erläutert. Der Winkelhebel 20 verläuft hierbei zunächst in Richtung der Rückenlehne 14 folgend abwärts, um dann in einen längeren, leicht nach vorne geneigten vorderen Endbereich 22 überzugehen. Der dahingehende Übergang erfolgt über zwei entsprechende Knickstellen zwischen vorderem und hinterem Endbereich 22,18. Die hintere Kante des Sitzbodens 12 ist über eine Drehachse 24 am Winkelhebel 20 angelenkt, wodurch eine in Fig.2 dargestellte Neigungsänderung 25 des Sitzbodens 12 gegenüber dem Kabinenboden als Aufständerfläche möglich ist.

Vor der Drehachse 24 , also in Richtung des vorderen Teils des Sitzes, befindet sich ein hinterer Lenker 26, der am Winkelhebel 20 mittels eines Drehgelenks 27 angelenkt ist. Der andere Endbereich des Lenkers 26 ist in einem Drehpunkt 29 gelagert, der bezüglich der Grundstruktur des Sitzes an dieser schwenkbar angelenkt ist. Ein weiterer, vorderer Lenker 28 ist im vorderen Endbereich 22 des Winkelhebels 20 an einem vorderen Drehgelenk 30 angelenkt, wobei am das Drehgelenk 30 aufweisenden Ende der vordere Lenker 28 in Richtung auf den hinteren Lenker 26 zu abgekröpft ausgebildet ist. Im Bereich der zu dieser Kröpfung gehörenden Knickstelle des vorderen Lenkers 28 greift ein stangenartiges Koppelteil 31 als Teil der Kopplungseinrichtung 16 an eine entsprechende Gelenkstelle 33 - auch in Form einer Bohrung od. dgl. - des vorderen Lenkers 28 an. Mit seinem anderen freien Ende greift das Koppelteil 31 an die Unterseite des Sitzbodens 12 an und ist dergestalt mit diesem verbunden. Des weiteren ist in Blickrichtung auf die Fig. 1 gesehen das untere Ende des vorderen Lenkers 28 an einem weiteren Drehpunkt 32 der Grundstruktur angelenkt.

Das Koppelteil 31 greift mithin an der unteren Seite des Sitzbodens 12 an und stellt so neben der Drehachse 24 eine Kopplung zwischen der Kopplungseinrichtung 16 und dem Sitzboden 12 als Ganzes her. Ferner bilden die beiden angesprochenen Lenker 26,28 als Teile eines Lenkerpaares einen sog. Lenkertrieb aus als Schwenk-Bewegungsgetriebe für den Sitzboden 12 nebst Rückenlehne 14. Die beschriebene Kopplungseinrichtung 16 ist vorzugsweise randseitig an beiden Enden des Sitzes angeordnet; bei entsprechender Auslegung besteht aber auch die Möglichkeit, die dahingehende Kopplungseinrichtung 16 nur an einer Seite anzuordnen oder beispielsweise im Mittenbereich des Sitzbodens 12 unterhalb desselben. Wie bereits dargelegt, ist das Koppelteil 31 um seine Aufnahme im vorderen Lenker 28 drehbar geführt und das Koppelteil 31 ist in Bewegungsrichtung 10 am Sitzboden 12 über eine nicht näher dargestellte Kulissen-Schwenkführung derart fixiert, dass zwar keine relative Verschiebung in axialer Richtung zwischen Koppelteil 31 und Sitzboden 12 erfolgt; sehr wohl aber eine Drehbewegung des Koppelteils 31 bezüglich des Sitzbodens 12 ermöglicht ist, beispielsweise indem das freie Ende des Koppelteils 31 in einer nicht näher dargestellten Lauf- oder Schwenkbuchse der angesprochenen Schwenkführung geführt ist. Somit kann ein Verschwenken des Koppelteils 31 im Gegenuhrzeigersinn bezogen auf dessen Ausgangsstellung I in Fig.1 zumindest ein Verschieben der Sitzvorderkante des Sitzbodens 12 in Bewegungsrichtung 10 bewirken.

Die dahingehenden Einstellmöglichkeiten sind näher in der Fig.2 dargestellt.

Fig.2 zeigt den aus Fig.1 bereits beschriebenen Sitz in der strichliniert wiedergegebenen Ausgangsstellung I zusammen mit der bereits erläuterten Kopplungseinrichtung 16. Um Wiederholungen zu vermeiden, werden demgemäß die gleichen Teile nach der Fig.2, die bereits bei Fig.1 erläutert wurden, nicht nochmals beschrieben; jedoch mit denselben Bezugszeichen versehen. Der in Fig.2 dargestellte Sitz ist mit seiner Rückenlehne 14, der Kopplungseinrichtung 16 sowie dem Sitzboden 12 nicht nur in der in der Fig.1 entsprechenden Ausgangsstellung I gezeigt, sondern zum anderen auch in der angestrebten Komfortstellung II. Insoweit beziehen sich die durchgezogenen Zeichnungslinien auf die Komförtstellung II.

Eine Neigungsänderung 44 der Rückenlehne 14 nach hinten wird beim Übergang aus der Ausgangsstellung I zur Komfortstellung II vollzogen, wobei mit Hilfe der Kopplungseinrichtung 16 ebenso die Neigungsänderung 25 des Sitzbodens 12 dergestalt bewirkt ist, dass im hinteren Teil des Sitzbodens 12 sich dieser absenkt und im Bereich der Sitzvorderkante eine Anhebung oder eine Höhenzunahme um die Strecke 50 stattfindet. Gleichzeitig und synchron mit der rückwärtigen Neigungseinstellung der Rückenlehne 14 kommt es zu einer Vergrößerung der Sitztiefe und mithin zu einer Sitztiefeneinstellung, wobei in Fig.2 die dahingehende Zunahme mit 52 bezeichnet ist. In der dahingehenden Komfortstellung II ist das Koppelteil 31 im Gegenuhrzeigersinn nach vorne verschwenkt, wobei die dahingehende Bewegung über den Lenkertrieb ausgelöst ist, der zusammen mit der Drehachse 24 die Bewegung nach vorne im Sinne einer Zwangsführung bewirkt. Bei der in der Fig.2 gezeigten Ausführungsform ist durchaus eine Sitztiefenvergrößerung um 2 bis 3 cm möglich und eine Höhenzunahme 50 im Bereich der Sitzvorderkante von ca. 2 cm. Für die dargestellte Ausführungsform ergibt sich dabei ein Winkelverhältnis der Neigungsänderung 44 der Rückenlehne 14 zur Neigungsänderung 25 des Sitzbodens 12 von ungefähr 3,5, wobei die Neigungsänderung 44 der Rückenlehne 14 ungefähr 14° beträgt und die Neigungsänderung 25 des Sitzbodens 12 bei ungefähr 4° liegt, jeweils bezogen auf deren Lage in der Ausgangsstellung I.

Die beiden Figuren zeigen den platzsparenden Aufbau der Kopplungseinrichtung 16, die mit dem Lenkertrieb die Oberseite des Tragkörpers 15 übergreift und somit wenig Einbauraum benötigt. Auch wird die dahingehende Anordnung erhöhten Crasherfordernissen gerecht, da sich der Lenkertrieb sinnfällig am Tragkörper 15 abstützen kann.

Anhand der Fig.2 soll nun die Funktion der erfindungsgemäßen Kopplungseinrichtung 16 näher erläutert werden. Ausgehend von der Ausgangsstellung I (TTL-Position) übt ein Sitzbenutzer, der in die Komfortstellung II gelangen will, zunächst insbesondere mit seinem Schulterbereich einen Druck gegen die Rückenlehne 14 aus und kombiniert dies mit einer Vorschiebebewegung seines sonstigen Körpers in Richtung des Pfeiles 10. Durch diese Krafteinleitung wird über die Dreh- und die Gelenkstellen der Lenkertrieb von seiner in der Fig.1 gezeigten Stellung nach vorne geschwenkt gemäß der Darstellung nach der Fig.2, wobei sich insbesondere der vordere Lenker 28 aufrichtet. Dadurch, dass der Winkelhebel 20 im Uhrzeigersinn sich entlang seines hinteren Endbereichs 18 und um die Drehachse 24 schwenkend nach unten neigt, senkt sich der Sitzboden 12 im hinteren Bereich gleichfalls ab und die Sitzvorderkante hebt sich um den Weg 50 an. Gleichzeitig ergibt sich die Verschiebung um die Wegstrecke 52 nach vorne. Für eine Rückstellbewegung in die Ausgangsstellung I ist die Bewegungsfolge umzukehren und die Aufrichtbewegung der Rückenlehne 14 kann über einen nicht näher dargestellten Energiespeicher, beispielsweise in Form eines sog. Hydro-Locks oder Gas-Locks, mit unterstützt werden. Dahingehende Körperkräfte unterstützende Einstellmittel sind im Sitzbau bei Flugzeugen üblich, so dass an dieser Stelle hierauf nicht mehr näher eingegangen wird. Bei der in den Fig. 1 und 2 gezeigten Ausführungsform sind nur die Endstellungen I und II angesprochen; es ist aber auch möglich, zwischen den Endstellungen 1 und II arretierbare Zwischenstellungen vorzusehen, beispielsweise mittels der angesprochenen Lock-Einrichtung (siehe hierzu auch WO 02/16161 A). Auf diese Art und Weise lassen sich in einem sehr weit gezogenen Rahmen Komfortstellungen erreichen.

Wie insbesondere die Fig.1 zeigt, ist in der Ausgangsstellung I der vordere Lenker 28 mit dem Koppelteil 31 derart "eingefaltet", dass er aufgrund seiner Abkröpfung in einem schwach geneigten Bahnverlauf in den weitgehend horizontal ausgerichteten vorderen Endbereich 22 des Winkelhebels 20 übergeht, der rückwärtig und vor Erreichen des Übergangs zum hinteren Endbereich 18 von dem aufgestellten weiteren Lenker 26 des Lenkertriebes abgestützt ist. Dergestalt ergibt sich an dem vorderen Drehgelenk 30 eine Art Überzenterung, die bei arretiertem Sitz Fliehkräften in Richtung des Pfeiles 10 entgegenwirkt, um so auch bei Extremsituationen, wie bei einem turbulenten Flug oder im Crashfall, den Sitz in der aufrechten Ausgangslage I zu halten. Trotz dieser Überzenterung ist es überraschend, dass mit relativ geringen Körperkräften der Sitzbenutzer die Komfortstellung II nach Fig.2 einnehmen kann, bei dem er den vorderen Lenker 28 aufrichtet, der dann dergestalt mit dem hinteren Lenker 26 und dem vorderen Endbereich 22 des Winkelhebels 20 eine Art übergreifende Tragbrücke für den Sitzboden 12 gegenüber dem Tragkörper 15 ausbildet. Da sowohl die Drehachse 24 in jeder Neigungseinstellung in axialer Richtung dicht benachbart zu dem Drehgelenk 27 angeordnet ist und die Angreifstelle des Koppelteils 31 am Sitzboden 12 dicht im Einflußbereich des vorderen Lenkers 28 verbleibt, ist insgesamt ein Lenkertrieb geschaffen, der zum einen sehr stabil und funktionssicher arbeitet und zum anderen nur geringe Betätigungskräfte benötigt, die aber in anderen Richtungen aufzubringen sind, als eine möglicherweise auftretende Fliehkrafteinleitung im Crashfall.

## Patentansprüche

1. Sitz, insbesondere Fahrzeug- oder Fluggastsitz, mit einem Sitzboden (12), einer Rückenlehne (14), einer Grundstruktur zur Aufständerung des Sitzes auf einem Boden, sowie einer Kopplungseinrichtung (16) zur Kopplung der Bewegungseinstellung der Rückenlehne (14) mit dem Sitzboden (12) zwischen einer Ausgangs-(I) und mindestens einer Komfortstellung (II) sowie umgekehrt, wobei bei einem Übergang der Rückenlehne (14) von der Ausgangs-(I) zur Komfortstellung (II) eine Neigungsänderung der Rückenlehne (14) und des Sitzbodens (12) nach hinten erfolgt und wobei die Kopplungseinrichtung (16) mindestens ein Steuerteil aufweist, das über die Bewegung der Rückenlehne (14) und/oder des Sitzbodens (12) ansteuerbar ist und dabei den Sitzboden (12) und/oder die Rückenlehne (14) zwischen den genannten Stellungen (I, II) verfährt, und wobei das Steuerteil einen Winkelhebel (20) aufweist, der mit seinem einen, hinteren Endbereich (18) an der Rückenlehne (14) starr angelenkt ist und zumindest ein Lagerelement mit einer Drehachse (24) zur Abstützung einer Schwenkbewegung des Sitzbodens (12) um die Drehachse (24) umfasst, und der mit seinem anderen, vorderen Endbereich (22) mit mindestens einem Lenkertrieb in Wirkverbindung steht, wobei der Lenkertrieb zumindest zwei Kopplungsstellen (27, 29, 30, 32) zur Ankopplung des Winkelhebels (20) an die Grundstruktur aufweist und der Lenkertrieb bei dem Übergang der Rückenlehne (14) von der Ausgangs- (I) in die Komfortstellung (II) nach vorne schwenkt, **dadurch gekennzeichnet, dass** die Kopplungsstellen (27, 29, 30, 32) in jeder Stellung der Rückenlehne (14) mit dem Sitzboden (12) zwischen der Ausgangs-(I) und der mindestens einen Komfortstellung (II) vor der Drehachse (24) angeordnet sind.

2. Sitz nach Anspruch 1, **dadurch gekennzeichnet, dass** der jeweilige Lenkertrieb mindestens ein Paar an Lenkern (26, 28) aufweist, die mit ihren jeweils gegenüberliegenden Endbereichen drehbar am zuordenbaren Winkelhebel (20) und an der Grundstruktur des Sitzes angreifen.

3. Sitz nach Anspruch 2, **dadurch gekennzeichnet, dass** in der Ausgangsstellung (I) die Lenker (26, 28) eines jeden Paares In Richtung auf die Rückenlehne (14) zugeneigt sind, und dass in Abkehr hiervon in der Komfortstellung (II) zumindest ein Lenker (26) des Paares auf den anderen Lenker (28) zugeneigt ist.

4. Sitz nach Anspruch 2 oder 3, **dadurch gekennzeichnet, dass** in jedem Bewegungszustand die Anlenkstellen (27, 30) der Lenker (26, 28) eines Lenkerpaares am Winkelhebel (20) einen gleichen Abstand voneinander aufweisen, ebenso wie die Anlenkstellen (29, 32) des Lenkerpaares an der Grundstruktur.

5. Sitz nach einem der Ansprüche 2 bis 4, **dadurch gekennzeichnet, dass** der Sitzboden (12) über mindestens ein Koppelteil (31) der Kopplungseinrichtung (16) neigbar und längeneinstellbar mit dem zuordenbaren Winkelhebel (20) und dem zuordenbaren Lenkertrieb verbunden ist.

6. Sitz nach einem der Ansprüche 2 bis 5, **dadurch gekennzeichnet, dass** der eine Lenker (28) eines Paares an seiner dem Winkelhebel (20) in der Ausgangsstellung (I) zugewandten Seite in Richtung des anderen Lenkers (26) abgekröpft ist.

7. Sitz nach einem der Ansprüche 2 bis 6, **dadurch gekennzeichnet, dass** die Lenker (26, 28) des jeweiligen Lenkertriebes in jeder Verfahrstellung einen hohlprofilartigen Tragkörper (40) als Teil der Grundstruktur übergreifen.

8. Sitz nach einem der vorhergehenden Ansprüche, **dadurch gekennzeichnet, dass** mit der rückwärtigen Neigungseinstellung der Rückenlehne (14) und der Körperkraft ein Energiespeicher aufgeladen ist, der bei der entgegengesetzten Aufrichtbewegung der Rückenlehne (14) diese dabei unterstützt.

9. Sitz nach Anspruch 1, **dadurch gekennzeichnet, dass** eine hintere Kante des Sitzbodens (12) über die Drehachse (24) am Winkelhebel (20) angelenkt ist.

## Claims

1. Seat, in particular vehicle seat or air passenger seat, having a seat bottom (12), a backrest (14), a basic structure for supporting the seat on a floor, and a coupling device (16) for coupling the movement setting of the backrest (14) with the seat bottom (12) between a starting position (I) and at least one comfort position (II) and vice versa, a change in the backward inclination of the backrest (14) and of the seat bottom (12) taking place during a transition of the backrest (14) from the starting position (I) to the comfort position (II), and the coupling device (16) having at least one control part which can be actuated via the movement of the backrest (14) and/or of the seat bottom (12) and in the process moves the seat bottom (12) and/or the backrest (14) between the said positions (I, II), and the control part having an angled lever (20) which is rigidly articulated to the backrest (14) with its one, rear end region (18), and comprising at least one bearing element with a rotational axis (24) for supporting a pivoting movement of the seat bottom (12) about the rotational axis (24), and which angled lever (20) is operatively connected to at least cute link drive by means of its other, front end region (22), the link drive having at least two coupling points (27, 29, 30, 32) for coupling the angled lever (20) to the basic structure, and the link drive pivoting forwards during the transition of the backrest (14) from the starting position (I) to the comfort position (II), **characterized in that** the coupling points (27, 29, 30, 32) are arranged in front of the rotational axis (24) in every position of Lhe backrest (14) with the seat bottom (12) between the starting position (I) and the at least one comfort position (II).

2. Seat according to Claim 1, **characterized in that** the respective link drive has at least one pair of links (26, 28) which act rotatably, by way of their end regions which in each case lie opposite one another, on the angled lever (20) which is assignable, and on the basic structure of the seat.

3. Seat according to Claim 2, **characterized in that**, in the starting position (I), the links (26, 28) of each pair are inclined in the direction of the backrest (14), and **in that**, in a departure from this in the comfort position (II), at least one link (26) of the pair is inclined towards the other link (28).

4. Seat according to Claim 2 or 3, **characterized in that**, in every movement state, the articulation points (27, 30) of the links (26, 28) of a link pair on the angled lever (20) are identically spaced apart from one another, just like the articulation points (29, 32) of the link pair on the basic structure.

5. Seat according to one of Claims 2 to 4, **characterized in that** the seat bottom (12) is connected to the angled lever (20) which is assignable, and to the link drive which is assignable, via at least one coupling part (31) of the coupling device (16) such that it can be inclined and can have its length set.

6. Seat according to one of Claims 2 to 5, **characterized in that**, on its side which faces the angled lever (20) in the starting position (I), one link (28) of a pair is angled off in the direction of the other link (26).

7. Seat according to one of Claims 2 to 6, **characterized in that**, in every moving position, the links (26, 28) of the respective link drive enrage over a hollow-profile-like supporting body (40) as part of the basic structure.

8. Seat according to one of the preceding claims, **characterized in that** an energy store is charged by way of the rearward inclination setting of the backrest (14) and by physical force, which energy store supports the backrest (14) in its straightening-up movement in the opposite direction.

9. Seat according to Claim 1, **characterized in that** a rear edge of the seat bottom (12) is articulated via the rotational axis (24) on the angled lever (20).

## Revendications

1. siège, en particulier siège de véhicule ou de passager d'aéronef, comprenant un fond de siège (12), un dossier (14) , une structure de base pour le montage du siège sur un plancher, ainsi qu'un dispositif d'accouplement (16) pour accoupler le réglage du mouvement du dossier (14) avec le fond de siège (12) entre une position initiale (I) et au moins une position de confort (II) ainsi qu'inversement, une modification de l'inclinaison du dossier (14) et du fond de siège (12) s'effectuant vers l'arrière lors d'un passage du dossier (14) de la position initiale (I) à la position de confort (II), et le dispositif d'accouplement (16) comprenant au moins un élément de commande qui peut être commandée au moyen du mouvement du dossier (14) et/ou du fond de siège (12) déplaçant en l'occurrence le fond de siège (12) et/ou le dossier (14) entre lesdites positions (I, II), et l'élément de commande comprenant un levier coudé (20), qui est articulé rigidement sur le dossier (14) au moyen de l'une de ses régions d'extrémité, c'est-à-dire sa région d'extrémité arrière (18), lequel levier coudé (20) comporte au moins un élément de palier doté d'un axe de rotation (24) pour supporter un mouvement de pivotement du fond de siège (12) autour de l'axe de rotation (24), et, au moyen de son autre région d'extrémité, c'est-à-dire sa région d'extrémité avant (22), est en liaison fonctionnelle avec au moins un pignon à bras, le pignon à bras comprenant au moins deux points d'accouplement (27, 29, 30, 32) pour accoupler le levier coudé (20) à la structure de base, et le pignon à bras pivotant vers l'avant lors du passage du dossier (14) de la position initiale (I) à la position de confort (II), **caractérisé en ce que** les points d'accouplement (27, 29, 30, 32) sont disposés en avant de l'axe de rotation (24) dans chaque position du dossier (14) avec le fond de siège (12) entre la position initiale (I) et l'au moins une position de confort (II).

2. Siège selon la revendication 1, caractérisé an ce que le pignon à bras respectif comprend au moins une paire de bras de liaison (26, 28) qui, au moyen de leurs régions d'extrémité respectivement opposées, viennent rotativement en prise avec le levier coudé (20) associable, et avec la structure de base du siège.

3. Siège selon la revendication 2, **caractérisé en ce que**, dans la position initiale (I) les bras de liaison (26, 28) de chaque paire sont inclinés en direction du dossier (14), et **en ce qu'**au contraire, dans la position de confort (II), au moins un bras de liaison (26) de la paire est incliné vers l'autre bras de liaison (28).

4. Siège selon la revendication 2 ou 3, **caractérisé en ce que**, dans chaque état de mouvement, les points d'articulation (27, 30) des bras de liaison (26, 28) d'une paire de bras de liaison (26, 28) sur le levier coudé (20) sont séparés par une même distance l'un de l'autre que les points d'articulation (29, 32) de la paire de bras de liaison (26, 28) sur la structure de base.

5. Siège selon l'une quelconque des revendications 2 à 4, **caractérise en ce que** le fond de siège (12) est relié, au moyen d'au moins un élément d'accouplement (31) du dispositif d'accouplement (16), de manière inclinable et réglable en longueur, au levier coudé (20) associable et au pignon à bras associable.

6. Siège selon l'une quelconque des revendications 2 à 5, **caractérisé en ce que** l'un des bras de liaison (28) d'une paire est coudé en direction de l'autre bras de liaison (26) de son coté orienté vers le levier coudé (20) dans la position initiale (I).

7. Siège selon l'une quelconque des revendications 2 à 6, **caractérisé en ce que** les bras de liaison (26, 28) du pignon à bras respectif, dans chaque position de déplacement, viennent en prise par le dessus avec un corps porteur (40) en forme de profilé creux faisant partie de la structure de base.

8. Siège selon l'une quelconque des revendications précédentes, **caractérisé en ce qu'**un accumulateur d'énergie est chargé à l'aide du réglage d'inclinaison vers l'arrière du dossier (14) et de la force corporelle, lequel accumulateur d'énergie, lors du mouvement de redressement du dossier (14) en sens inverse, favorise en l'occurrence ce mouvement.

9. Siège selon la revendication 1, **caractérisé en ce qu'**un bord arrière du fond de siège (12) est articulé au levier coudé (20) au moyen de l'axe de rotation (24).
